**Europäisches Patentamt**

**European Patent Office**

**Office européen des brevets**

(19)

(11) Numéro de publication: **0 220 122 B1**

# (12) FASCICULE DE BREVET EUROPEEN

(45) Date de publication du fascicule du brevet: 05.04.89

(51) Int. Cl.⁴: **F16L 59/16**

(21) Numéro de dépôt: **86402281.9**

(22) Date de dépôt: **14.10.86**

(54) **Perfectionnements aux moyens d'isolation thermique de tuyauteries soumises à des contraintes thermiques, hydrostatiques et mécaniques et procédé de réalisation desdits moyens d'isolation.**

(30) Priorité: **17.10.85 FR 8515392**

(43) Date de publication de la demande: **29.04.87 Bulletin 87/18**

(45) Mention de la délivrance du brevet: **05.04.89 Bulletin 89/14**

(84) Etats contractants désignés: **DE ES FR GB IT NL SE**

(56) Documents cités:
**FR-A- 2 557 671**
**US-A- 2 857 931**
**US-A- 3 685 546**
**US-A- 3 728 187**
**US-A- 4 044 184**

(73) Titulaire: **HUTCHINSON, 2 rue Balzac, F-75008 Paris(FR)**

(72) Inventeur: **Zermati, Charles, 15, rue d'Aven, F-78310 Maurepas(FR)**
Inventeur: **Althabegoity, Jean, 26, rue de l'Ancien Palais, F-45200 Montargis(FR)**

(74) Mandataire: **Orès, Bernard et al, Cabinet ORES 6, Avenue de Messine, F-75008 Paris(FR)**

## Description

L'invention a pour objet des perfectionnements aux dispositifs d'isolation thermique de conduites sous-marines soumises à des contraintes thermiques, hydrostatiques et mécaniques élevées comprenant en combinaison, une première couche en élastomère qui entoure la conduite à isoler et assure la protection anti-corrosion de cette dernière, un moyen d'isolation thermique comportant une pluralité de secteurs ou de couches en un matériau isolant lacunaire enfermant de l'air, et résistant aux pressions hydrostatiques élevées, lesquels secteurs ou couches sont adhérisés entre eux par des feuilles ou couches d'élastomère ayant subi une vulcanisation à une température inférieure ou égale à 120°C, ledit moyen d'isolation thermique étant superposé de façon continue sur la première couche susdite, une deuxième couche en élastomère étanche à l'eau de mer, résistante à l'abrasion, qui entoure le moyen d'isolation thermique, lesquels couches et moyens d'isolation protègent chaque tube d'une conduite à l'exclusion des extrémités de ce dernier qui sont laissées sans protection pour permettre la soudure bout à bout de tubes adjacents les uns aux autres avec un moyen de jointoyage rapide et étanche des dispositifs d'isolation de deux tubes adjacents.

Les éléments ou tronçons constitutifs de telles conduites sont préfabriqués en usine en laissant au voisinage des extrémités de courtes longueurs de tube métallique dénudées, c'est-à-dire des parties non garnies de la couche anti-corrosion et du moyen d'isolation thermique, pour permettre le soudage entre eux de tronçons ou éléments adjacents, le soudage étant suivi d'un jointoyage lequel est destiné, d'une part, à assurer la continuité de la protection anti-corrosion et, d'autre part, la continuité du moyen d'isolation thermique ainsi que celle de la deuxième couche ou gaine externe de protection.

Dans le cas de conduites immergées, en mer ou en eau douce, les cahiers des charges imposent, en particulier pour la protection de l'environnement, que soient respectées des exigences sévères d'étanchéité, de résistance aux contraintes hydrostatiques et mécaniques, de durée de vie, etc., et c'est pourquoi de nombreux travaux ont été effectués pour réaliser de tels dispositifs de jointoyage qui répondent aux spécifications imposées par les exploitants et/ou les utilisateurs des conduites, ainsi que par les organismes privés ou publics chargés de leur surveillance.

Complémentairement aux conditions imposées et rappelées ci-dessus, il importe, en outre, que le dispositif de jointoyage puisse être mis rapidement en place sur son lieu d'utilisation et cela quelles que soient les conditions de travail parfois difficiles aussi bien à terre qu'en mer.

La Demanderesse a déjà proposé dans FR-A 2 557 671 un procédé et des moyens perfectionnés de jointoyage étanche de conduites sous-marines qui ont donné et donnent satisfaction, en particulier lorsqu'ils ont été ou sont utilisés pour la construction de pipe-lines de transport d'huile sortant des puits de production à une température de l'ordre d'environ 100°C et qui sont immergés jusqu'à des profondeurs de l'ordre de 200 m.

Cependant, la solution précédemment proposée par la Demanderesse est relativement onéreuse en raison du surcroît de précautions prises pour satisfaire aux conditions dont certaines sont parfois contradictoires et qui ont été exposées ci-dessus.

La poursuite des travaux entrepris par la Demanderesse a maintenant permis de fournir des perfectionnements aux moyens d'assemblage d'éléments ou de tronçons de conduites, en particulier du type de celles décrites ci-dessus, qui tout en aboutissant à des ensembles présentant les mêmes garanties quant à la protection de l'environnement que les dispositifs antérieurement connus, permettent d'abaisser de façon sensible le coût de fabrication d'une part et, d'autre part, permettent de réduire le temps de mise en œuvre, avec pour conséquence une diminution du coût de construction d'un pipe-line ou analogue résultant de l'assemblage des éléments ou tronçons entre eux, à terre ou sur une barge dont le coût d'exploitation est élevé.

Un dispositif selon l'invention d'isolation thermique de conduites sous-marines soumises à des contraintes thermiques, hydrostatiques et mécaniques élevées comprend en combinaison un tube métallique, une première couche en élastomère qui entoure ledit tube et assure ainsi la protection anticorrosion de celui-ci, un moyen d'isolation thermique comportant une pluralité de secteurs ou de couches en un matériau isolant lacunaire renfermant de l'air, résistant aux pressions hydrostatiques élevées, lesquels secteurs ou couches sont adhérisés entre eux par des feuilles ou couches d'élastomère ayant subi une vulcanisation à une température inférieure ou égale à 120°C, ledit moyen étant superposé de façon continue sur la première couche susdite, une deuxième couche en élastomère étanche à l'eau de mer, résistante à l'abrasion, qui entoure le moyen d'isolation thermique, lesquelles couches et moyens d'isolation protègent chaque tube métallique d'une conduite à l'exclusion des extrémités de ce dernier, qui sont laissées sans protection pour permettre la soudure bout à bout de tubes adjacents les uns aux autres, et un moyen de jointoyage rapide et étanche des dispositifs d'isolation de deux tubes adjacents.

Il est caractérisé en ce que chaque tube ou tronçon de conduite comprend à au moins une de ses extrémités, et de préférence à ses deux extrémités, un manchon en une matière présentant de bonnes caractéristiques de résistance à la corrosion interposé entre la surface externe du tube et ladite première couche anticorrosion et mis en place lors de la préfabrication en usine dudit tube ou tronçon, ledit manchon n'étant qu'en partie seulement recouvert par la couche de matériau élastomère.

Dans une forme de réalisation préférée, le manchon est prévu à distance de (des) extrémité(s) libre(s) du tube.

Dans une forme de réalisation qui met en œuvre une matière synthétique thermoplastique, celle-ci est choisie parmi les polyamides.

Dans une réalisation qui met en œuvre une matière synthétique thermodurcissable, celle-ci est de préférence choisie parmi les époxy.

Dans une autre forme de réalisation le manchon est en un métal vaporisé.

L'invention a également pour objet un procédé pour la fabrication de tubes ou tronçons perfectionnés de conduites tels que définis ci-dessus, caractérisé en ce que l'on met en place au voisinage d'au moins une extrémité de l'élément, de préférence au voisinage des deux extrémités, un manchon en une matière présentant de bonnes caractéristiques de résistance à la corrosion, préalablement à la fixation sur ledit tube métallique de la couche anticorrosion en matériau élastomère, et en ce que l'on met en place ladite couche sur le tube métallique de manière telle qu'elle recouvre le manchon sur une partie de sa longueur seulement.

Le manchon est mis en place au voisinage de (des) extrémité(s) libre(s) de l'élément après le traitement mécanique usuel de sablage et/ou de grenaillage du tube métallique mais préalablement à l'exécution d'un traitement de préparation chimique comme la pose sur ledit tube métallique d'un produit d'adhérisation du matériau élastomère formant la couche anticorrosion.

Préalablement à la mise en place sur le tube métallique du manchon en une matière synthétique du type thermodurcissable ou thermoplastique, on procède au chauffage de la zone destinée à être recouverte par ledit manchon à l'aide de cordons électriques chauffants, d'une torche ou, de préférence, à l'aide d'une bobine de chauffage par induction.

Le chauffage est effectué sur une zone limitée par des moyens de protection et dans le cas d'un manchon en époxy on dépose sur ladite zone de la poudre d'époxy par projection ou pulvérisation.

Dans un mode opératoire préféré, on effectue sur le tube métallique un traitement mécanique de sablage ou grenaillage, et après mise en place d'un manchon, en une matière synthétique du type thermodurcissable ou thermoplastique on effectue sur la partie métallique du tube un traitement de préparation chimique pour l'adhérisation de la couche de matériau élastomère, on rapporte ladite couche de matériau, on met en place le moyen d'isolation thermique, on dispose des moyens de protection dudit manchon à l'encontre du traitement de vulcanisation subséquent sur la partie du manchon non recouverte par ladite couche en matériau élastomère et on procède à la vulcanisation de cette dernière.

Dans le cas d'un manchon en polyamide celui-ci est rapporté sur le tube métallique par dépôt en phase liquide.

Dans le cas d'un manchon métallique celui-ci est rapporté par vaporisation.

On peut alors, à l'aide de tronçons de conduites selon l'invention et après soudure des tubes métalliques entre eux former au droit du plan de joint de deux tubes adjacents ainsi que de part et d'autre de ce plan, un revêtement continu d'une matière présentant de bonnes caractéristiques de résistance à la corrosion, avantageusement une matière synthétique du type thermodurcissable ou thermoplastique ou un revêtement de métal vaporisé sans solution de continuité entre les manchons en regard desdits tubes adjacents.

L'invention sera mieux comprise par la description qui suit, faite à titre d'exemple et en référence au dessin annexé dans lequel:

- la figure 1 est une vue partielle d'un tronçon de conduite perfectionné selon l'invention;
- la figure 2 est une vue illustrant la jointoyage de tronçons adjacents pour la réalisation d'une conduite;
- les figures 3 et 4 illustrent le procédé de fabrication d'un tronçon de conduite perfectionné selon l'invention.

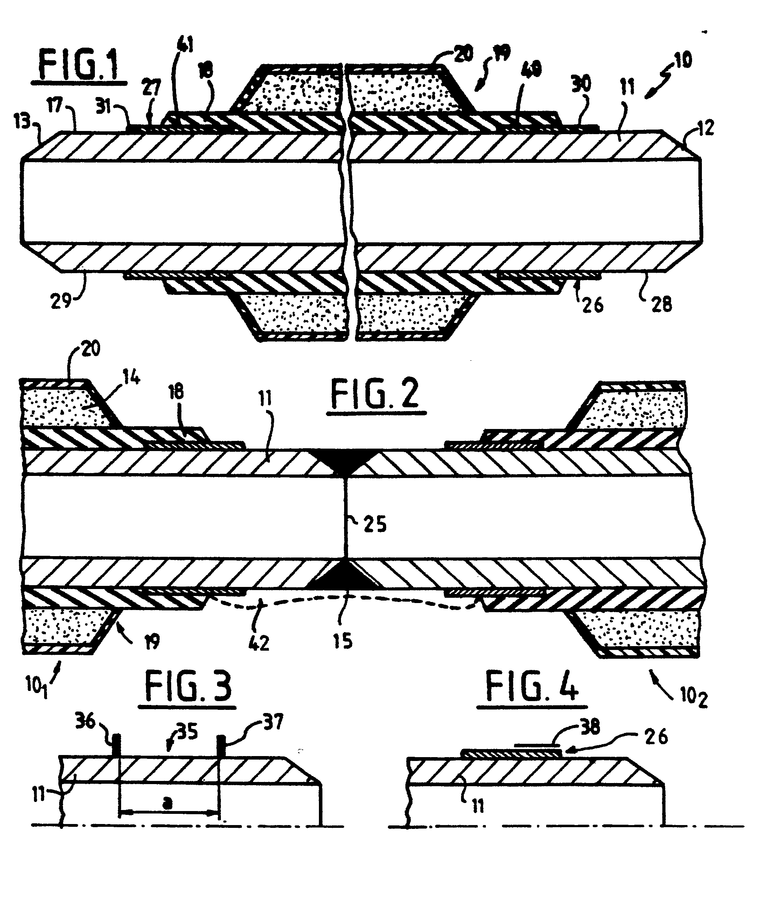

Un élément ou tronçon 10 de conduite, dont la longueur peut être de l'ordre d'une douzaine de mètres, comprend un tube métallique 11 à extrémités chanfreinées 12 et 13 pour la formation d'un joint de soudure 15 au droit du plan de joint 25 de deux éléments aboutés $10_1$ et $10_2$, figure 2. De façon en soi connue, la surface externe 17 du tube 11 est garnie d'une couche anticorrosion en un matériau élastomère 18, par exemple du polychloroprène d'une épaisseur de 4 millimètres dans le cas d'un élément 10 d'un diamètre d'environ 100 millimètres (4 pouces).

Comme montré sur les Figures 1 et 2, la couche anticorrosion 18 est entourée d'un moyen d'isolation thermique 19 lui-même enfermé dans une deuxième couche en élastomère étanche à l'eau de mer, résistante à l'abrasion et qui forme une gaine de protection externe 20. Le moyen d'isolation thermique 19 est constitué par un matériau isolant lacunaire 14 en bandes, ou en secteurs, adhérisés entre eux par des feuilles ou couches d'élastomère et mis en place en usine lors de la fabrication des éléments 10.

L'invention prévoit, pour faciliter le jointoyage d'éléments adjacents $10_1$ et $10_2$, de garnir chaque élément 10 d'un manchon 26, 27 en une matière présentant de bonnes caractéristiques de résistance à la corrosion, par exemple un métal vaporisé (aluminium métal ferreux) ou une matière synthétique du type thermodurcissable ou thermoplastique par exemple en polyamide comme celui connu sous le nom de Rilsan (une marque déposée de la Société ATOCHEM) ou en époxy les manchons étant placés au voisinage des extrémités de chaque élément à distance des bords chanfreinés 12 et 13, respectivement, et en partie recouvert par la couche anticorrosion 18. On ménage ainsi, au voisinage du bord d'extrémité 12, une zone annulaire 28 métallique nue, une zone 30 du manchon 26 qui n'est pas recouverte par la couche 18 et une zone 40 du manchon en partie recouverte par ladite couche. L'autre extrémité 13 de l'élément 10 présente une zone 29 analogue à la zone 28, une zone 31 analogue à la zone 30 et une zone 41 analogue à la zone 40.

Pour la fabrication, en usine, d'un élément ou tronçon tel que décrit ci-dessus, on procède d'abord au grenaillage et/ou sablage du tube métallique 11. La zone à recouvrir par les manchons 26, 27 – dont la longueur peut être de l'ordre de 10 à 20 cm –, est alors chauffée par induction, ou à l'aide d'une torche. Comme montré sur la figure 3, le chauffage est effectué sur une zone 35 de longueur $\underline{a}$ limitée par des moyens de protection montrés schématiquement en 36 et 37.

Dans le cas d'un manchon en époxy la poudre d'époxy est alors déposée sur la zone ainsi chauffée, par exemple par projection, pulvérisation, ou par tout autre moyen approprié, la solidarisation de l'époxy et du tube métallique, chauffé à une température de l'ordre de 200 à 250°C, ayant lieu par adhérisation par fusion suivant un processus communément désigné en anglais sous le nom de FBE (Fusion Bonded Epoxy).

Après refroidissement de la ou des zone(s) d'extrémité de l'élément ou tronçon 10, on rapporte sur une partie de la longueur des manchons 26, 27 un moyen de protection montré schématiquement en 38 sur la Figure 4 (pour le manchon 26), et destiné à protéger une partie dudit manchon lors de l'étape suivante qui est celle de préparation chimique, c'est-à-dire de dépôt sur la surface métallique 17 du tube 11 et sur la partie non protégée du manchon d'époxy d'un ou de produit(s) favorisant l'adhérisation des élastomères, connus sous le nom de primaire d'adhérisation, et qui sont, par exemple, dans le cas d'un élastomère en polychloroprène, des produits connus sous le nom de "CHEMOSIL 211" ou "CHEMOSIL 220" (Société HENKEL) ou CHEMLOCK (Société LORD CHEMICAL, USA).

On procède ensuite sur le tube métallique 11 et sur la partie non protégée du manchon 26 à la mise en place de la couche anti-corrosion en matériau élastomère 18, cette opération étant suivie de celle de mise en place du moyen d'isolation thermique 19.

Les moyens de protection 38 demeurant en place ou étant complétés par une protection supplémentaire à l'encontre des vapeurs de l'étuve de vulcanisation, comme un film de matière plastique, on procède à ladite vulcanisation.

A la sortie de l'étuve de vulcanisation et après enlèvement des moyens de protection 38, le tronçon ou élément de conduite perfectionné selon l'invention est comme montré sur la Figure 1.

En variante, la couche anti-corrosion en matériau élastomère 18 est déposée sur les moyens de protection 38, alors sous forme d'une bande de matière plastique et ladite bande est retirée, après le traitement de vulcanisaton, pour dénuder sur une courte longueur l'extrémité du manchon d'époxy 26 la plus voisine de l'extrémité chanfreinée 12 du tube métallique.

Lorsque, comme montré sur la Figure 2, deux éléments de conduite $10_1$ et $10_2$ ont été aboutés et que leurs parties métalliques 11 ont été réunies par une soudure 15, on dépose au droit de la zone de joint 25 et de part et d'autre de celle-ci, de façon plus précise entre et sur les manchons $26_1$ et $27_2$ en regard, un anneau 42 en époxy à l'aide duquel est réalisée la continuité de la protection anti-corrosion entre les éléments de conduite adjacents, $10_1$ et $10_2$.

Le jointoyage de ces éléments est alors complété par la mise en place, de façon en soit connue et dans la zone de jointoyage de moyens assurant la continuité du moyen d'isolation 19.

Compte tenue de la facilité et de la rapidité de formation d'un anneau en époxy 42 au droit de la zone de jointoyage, l'invention permet de réduire de façon sensible le temps de jointoyage tout en assurant, par la fixation en usine de la couche en élastomère 18 sur le manchon 26, 27 en époxy une excellente continuité de la protection anti-corrosion.

C'est un processus analogue qui est mis en œuvre lorsque les manchons 26, 27 sont en polyamide. Dans un tel cas la température mise en œuvre au cours du processus de vulcanisation peut être plus élevée que lors de l'utilisation de manchons en époxy, de sorte que le temps de vulcanisation peut être réduit et ainsi accroître la rentabilité économique du dispositif et du procédé de l'invention. En outre, le dispositif est alors approprié pour le transport de fluides d'une température d'au moins 120°C.

Dans une variante du procédé d'exécution, les manchons en polyamide sont mis en place à partir d'une application de la matière synthétique en phase liquide, c'est-à-dire par un procédé quelque peu analogue à l'exécution d'une peinture.

Dans le cas de manchons en métal vaporisé, ceux-ci sont rapportés par les techniques usuelles, par exemple à l'aide de pistolets à plasma ou analogues.

**Revendications**

1. Dispositif d'isolation thermique de conduites sous-marines soumises à des contraintes thermiques, hydrostatiques et mécaniques élevées, comprenant en combinaison un tube métallique, une première couche en élastomère qui entoure ledit tube et assure ainsi la protection anticorrosion de celui-ci, un moyen d'isolation thermique comportant une pluralité de secteurs ou de couches en un matériau isolant lacunaire enfermant de l'air, résistant aux pressions hydrostatiques élevées, lesquels secteurs ou couches sont adhérisés entre eux par des feuilles ou couches d'élastomère ayant subi une vulcanisation à une température inférieure ou égale à 120°C, ledit moyen étant superposé de façon continue sur la première couche susdite, une deuxième couche en élastomère étanche à l'eau de mer, résistante à l'abrasion, qui entoure le moyen d'isolation thermique, lesquelles couches et moyens d'isolation protègent chaque tube métallique d'une conduite à l'exclusion des extrémités de ce dernier, qui sont laissées sans protection pour permettre la soudure bout à bout de tubes adjacents les uns aux autres, et un moyen de jointoyage rapide et étanche des dispositifs d'isolation de deux tubes adjacents, caractérisé en ce que chaque tube (11) ou tronçon de conduite comprend à au moins une de ses extrémités, et de préférence à ses deux extrémités, un manchon (26, 27) en une matière présentant de bonnes caractéristiques de résistance à la corrosion interposé entre la surface externe (17) du tube et ladite première couche anticorrosion (18) et mis en place lors de la préfabrication en usine dudit tube ou tronçon, ledit manchon (26, 27) n'étant qu'en partie seulement recouvert par la couche de matériau élastomère (18).

2. Dispositif d'isolation thermique selon la revendication 1, caractérisé en ce que le manchon (26, 27) est prévu à distance de (des) l'extrémité(s) libre(s) (12, 13) du tube.

3. Dispositif selon la revendication 1 ou la revendication 2, caractérisé en ce que la matière constitutive du manchon est choisie parmi les époxy.

4. Dispositif selon une quelconque des revendications 1 ou 2, caractérisé en ce que la matière constitutive du manchon est choisie parmi les polyamides.

5. Dispositif selon la revendication 1 ou la revendication 2, caractérisé en ce que le manchon est en métal vaporisé.

6. Procédé pour la fabrication d'un élément ou tronçon de conduite d'un dispositif selon la revendication 1, caractérisé en ce que l'on met en place au voisinage d'au moins une extrémité de l'élément, de préférence au voisinage des deux extrémités, un manchon (26, 27) en une matière présentant de bonnes caractéristiques de résistance à la corrosion, préalablement à la fixation sur ledit tube métallique de la couche anticorrosion (18) en matériau élastomère, et en ce que l'on met en place ladite couche sur le tube métallique (11) de manière telle qu'elle recouvre le manchon (26, 27) sur une partie de sa longueur seulement.

7. Procédé selon la revendication 6, caractérisé en ce que le manchon (26, 27) est mis en place au voisinage de (des) l'extrémité(s) libre(s) de l'élément après le traitement mécanique usuel de sablage et/ou de grenaillage du tube métallique (11) mais préalablement à l'exécution d'un traitement de préparation chimique comme la pose sur ledit tube métallique (11) d'un produit d'adhérisation du matériau élastomère formant la couche anti-corrosion (18).

8. Procédé selon l'une quelconque des revendications 6 et 7, caractérisé en ce que, préalablement à la mise en place sur le tube métallique (11) du manchon en une matière synthétique du type thermodurcissable ou thermoplastique (26, 27), on procède au chauffage de la zone destinée à être recouverte par ledit manchon à l'aide de cordons électriques chauffants, d'une torche ou, de préférence, à l'aide d'une bobine de chauffage par induction.

9. Procédé selon la revendication 8, caractérisé en ce que le chauffage est effectué sur une zone (35) limitée par des moyens de protection (36, 37) et en ce que dans le cas d'un manchon en époxy on dépose sur ladite zone de la poudre d'époxy par projection ou pulvérisation.

10. Procédé selon l'une quelconque des revendications 6 à 9, caractérisé en ce qu'on effectue sur le tube métallique (11) un traitement mécanique de sablage ou grenaillage, et après mise en place d'un manchon, en une matière synthétique du type thermodurcissable ou thermoplastique on effectue sur la partie métallique (11) du tube un traitement de préparation chimique pour l'adhérisation de la couche (18) de matériau élastomère, on rapporte ladite couche de matériau, on met en place le moyen d'isolation thermique, on dispose des moyens de protection dudit manchon à l'encontre du traitement de vulcanisation subséquent sur la partie du manchon non recouverte par ladite couche en matériau élastomère et on procède à la vulcanisation de cette dernière.

11. Procédé selon la revendication 6, caractérisé en ce que dans le cas d'un manchon en polyamide celui-ci est rapporté sur le tube métallique par dépôt en phase liquide.

12. Procédé selon la revendication 6, caractérisé en ce que dans le cas d'un manchon métallique celui-ci est rapporté par vaporisation.

**Patentansprüche**

1. Einrichtung zur thermischen Isolation von Unterseerohrleitungen, die erhöhten thermischen, hydrostatischen und mechanischen Beanspruchungen ausgesetzt sind, umfassend in Kombination ein metallisches Rohr, eine erste Schicht aus Elastomer, die das Rohr umgibt und so den Antikorrosionsschutz desselben sicherstellt, ein Mittel zur thermischen Isolation, das eine Mehrzahl von Abschnitten oder Schichten aus einem isolierenden lufteinschließenden blasigen Material umfaßt, das erhöhten hydrostatischen Drücken widersteht, welche Abschnitte oder Schichten untereinander durch elastomere Folien oder Schichten, die einer Vulkanisation bei einer Temperatur, welche kleiner oder gleich 120°C ist, unterworfen worden sind, anhaftend gemacht sind, wobei diese Mittel in kontinuierlicher Weise auf der erwähnten ersten Schicht überlagert ist, eine zweite Schicht aus für Meerwasser dichtem Elastomer, das gegen Abrieb widerstandsfähig ist, welche das Mittel zur thermischen Isolation umgibt, wobei diese Schichten und Isolationsmittel jedes metallische Rohr einer Rohrleitung mit Ausschluß der Enden der letzteren schützen, welche ohne Schutz gelassen sind, um das Stumpfverschweißen von einander benachbarten Rohren miteinander zu ermöglichen, und ein Mittel des schnellen und dichten Ausfugens der Einrichtungen zur Isolation von zwei benachbarten Rohren, dadurch gekennzeichnet, daß jedes Rohr (11) oder jeder Rohrleitungsabschnitt an wenigstens einem seiner Enden, und vorzugsweise an seinen beiden Enden, eine Muffe (26, 27) aus einem Material, das gute Eigenschaften des Widerstands gegen Korrosion aufweist, umfaßt, die zwischen die äußere Oberfläche (17) des Rohrs und die erwähnte erste Antikorrosionsschicht (18) eingefügt und während der Vorfabrikation dieses Rohrs oder Abschnitts in dem Fertigungsbetrieb an Ort und Stelle angebracht ist, wobei diese Muffe (26, 27) nur teilweise von der Schicht aus elastomerem Material (18) bedeckt ist.

2. Einrichtung zur thermischen Isolation nach Anspruch 1, dadurch gekennzeichnet, daß die Muffe (26, 27) im Abstand von dem freien Ende oder den freien Enden (12, 13) des Rohrs vorgesehen ist.

3. Einrichtung nach Anspruch 1 oder Anspruch 2, dadurch gekennzeichnet, daß Material, welches die Muffe bildet, unter den Epoxy ausgewählt ist.

4. Einrichtung nach irgendeinem der Ansprüche 1 oder 2, dadurch gekennzeichnet, daß das Material, welches die Muffe bildet, unter den Polyamiden ausgewählt ist.

5. Einrichtung nach Anspruch 1 oder Anspruch 2, dadurch gekennzeichnet, daß die Muffe aus verdampftem Metall ist.

6. Verfahren zum Herstellen eines Rohrleitungselements oder -abschnitts einer Einrichtung gemäß Anspruch 1, dadurch gekennzeichnet, daß man in der Nähe von wenigstens einem Ende des Elements, vorzugsweise in der Nähe von beiden Enden, eine Muffe (26, 27) aus einem Material, das gute Eigenschaften des Widerstands gegen die Korrosion aufweist, anbringt, und zwar vor dem Befestigen der Antikorrosionsschicht (18) aus elastomerem Material auf diesem Rohr, und daß man diese Schicht auf dem metallischen Rohr (11) in der Weise anbringt, daß sie die Muffe (26, 27) nur auf einem Teil ihrer Länge bedeckt.

7. Verfahren nach Anspruch 6, dadurch gekennzeichnet, daß man die Muffe (26, 27) in der Nähe des freien Endes oder der freien Enden des Elements nach der üblichen mechanischen Behandlung des Sandstrahlens und/oder des Stahlsandens des metallischen Rohrs (11) anbringt, jedoch vor einem Ausführen einer Behandlung des chemischen Zurichtens, wie des Aufbringens eines Produkts der Haftung des elastomeren Materials, welches die Antikorrosionsschicht (18) bildet, auf dem metallischen Rohr (11).

8. Verfahren nach irgendeinem der Ansprüche 6 und 7, dadurch gekennzeichnet, daß man vor dem Anbringen der Muffe aus einem synthetischen Material vom wärmehärtbaren oder thermoplastischen Typ (26, 27) auf dem metallischen Rohr (1) eine Erwärmung der Zone, die dazu bestimmt ist, von der erwähnten Muffe bedeckt zu werden, mit Hilfe von elektrischen Heizleitungen, einer Fackel oder, vorzugsweise, mit Hilfe einer Induktionserhitzungsspule durchführt.

9. Verfahren nach Anspruch 8, dadurch gekennzeichnet, daß die Erwärmung über eine Zone (35) bewirkt wird, die durch Schutzmittel (36, 37) begrenzt ist, und daß man im Fall einer Muffe aus Epoxy auf dieser Zone Epoxypulver durch Spritzen oder Zerstäubung ablagert.

10. Verfahren nach irgendeinem der Ansprüche 6 bis 9, dadurch gekennzeichnet, daß man auf dem metallischen Rohr (11) eine mechanische Behandlung des Sandstrahlens oder Stahlsandens ausführt und daß man nach dem Anbringen einer Muffe aus einem synthetischen Material vom wärmehärtbaren oder thermoplastischen Typ auf dem metallischen Teil (11) des Rohrs eine Behandlung des chemischen Zurichtens für die Haftung der Schicht (18) aus elastomerem Material ausführt, daß man die erwähnte Materialschicht aufträgt, daß man das Mittel zur thermischen Isolation anbringt, daß man Mittel des Schutzes für die erwähnte Muffe gegen die nachfolgende Vulkanisationsbehandlung auf dem Teil der Muffe, der nicht durch diese Schicht aus elastomerem Material bedeckt ist, anordnet und daß man die Vulkanisation der letzteren durchführt.

11. Verfahren nach Anspruch 6, dadurch gekennzeichnet, daß im Falle einer Muffe aus Polyamid dieselbe durch Ablagerung in flüssiger Phase auf das metallische Rohr aufgetragen wird.

12. Verfahren nach Anspruch 6, dadurch gekennzeichnet, daß im Falle einer metallischen Muffe dieselbe durch Bedampfung aufgetragen wird.

## Claims

1. A thermal insulation system for undersea pipelines subjected to high thermal, hydrostatic, and mechanical stresses, the system comprising, in combination: a metal tube; a first layer of elastomer surrounding said tube, thereby providing it with anti-corrosion protection; thermal insulation means comprising a plurality of sectors of layers of cellular insulating material containing air and capable of withstanding hydrostatic pressures, said sectors or layers being bonded to one another by sheets or layers of elastomer that have been vulcanized at a temperature of not more than 120°C, said means being superposed in continuous manner over the first above-mentioned layer; a second layer of seawater-proof elastomer which resists abrasion and which surrounds the thermal insulation means; said layers and insulation means protecting each metal tube of a pipeline except at the ends of each tube, which ends are left without protection in order to enable adjacent tubes to be welded together end-to-end; and rapid waterproof caulking means for joining together the insulation systems on two adjacent tubes, characterized in that each tube (11) or length of pipeline includes a sleeve (26, 27) at at least one of its ends, and preferably at both ends, said sleeve being made of a material having good characteristics of resistance to corrosion and being interposed between the outside surface (17) of the tube and said first anti-corrosion layer (18) and being put into place while said tube or length is being prefabricated in a factory, said sleeve (26, 27) being covered only in part by the layer (18) of elastomer material.

2. A thermal insulation system according to claim 1, characterized in that the sleeve (26, 27) is provided at a distance from the, or each, free end of the tube (12, 13).

3. A system according to claim 1 or claim 2, characterized in that the sleeve-constituting material is selected from the epoxies.

4. A system according to claim 1 or claim 2, characterized in that the sleeve-constituting material is selected from the polyamides.

5. A system according to claim 1 or claim 2, characterized in that the sleeve is made of vaporized metal.

6. A method of making a part or length of pipeline including a system according to claim 1, characterized in that a sleeve (26, 27) is put into place in the vicinity of at least one end of the part, and preferably in the vicinity of both ends thereof, said sleeve being made of a material presenting good characteristics of resistance to corrosion, and being put into place prior to the anti-corrosion layer (18) of elastomer material being fixed onto said metal tube, and in that said layer is put into place on the metal tube (11) in such a manner as to lie over a portion only of the length of the sleeve (26, 27).

7. A method according to claim 6, characterized in that the sleeve (26, 27) is put into place in the vicinity of the, or each, free end of the part after the metal tube (11) has been subjected to conventional mechanical shot-blasting or sanding treatment but prior to performing chemical preparation treatment such as placing a substance on said metal tube (11) for bonding to the elastomer material constituting the anticorrosion layer (18).

8. A method according to claim 6 or 7, characterized in that, prior to the sleeve (26, 27) of synthetic material of the thermoplastic or thermosetting type being put into place on the metal tube (11), the zone intended to be covered by said sleeve is heated by means of heating electric wires, of a torch, or preferably of an induction heater coil.

9. A method according to claim 8, characterized in that the heating is performed over a zone (35) which is delimited by protection means (36, 37), and in that if the sleeve is made of epoxy, then epoxy powder is deposited on said zone by projection or spraying.

10. A method according to any one of claims 6 to 9, characterized in that a mechanical treatment of shot-blasting or sanding is performed on the metal tube (11), and after a sleeve made of a synthetic material of the thermosetting or thermoplastic type has been put into place, a chemical preparation treatment is performed on the metal portion (11) of the tube for bonding to the layer (18) of elastomer material, said layer of material is put into place, the thermal insulation means is put into place, means for protecting said sleeve against subsequent vulcanization treatment are put into place over the portion of the sleeve which is not covered by said layer of elastomer material, and said elastomer material is vulcanized.

11. A method according to claim 6, characterized in that when the sleeve is made of polyamide, the polyamide is applied to the metal tube by being deposited in the liquid phase.

12. A method according to claim 6, characterized in that when the sleeve is made of metal, the metal is applied by vaporization.

FIG.1

FIG.2

FIG.3

FIG.4